# EUROPÄISCHE PATENTANMELDUNG

(11) **EP 3 457 161 A1**
(43) Veröffentlichungstag der Anmeldung: **20.03.2019**
(21) Anmeldenummer: 18190353.5
(22) Anmeldetag: 23.08.2018
(51) Int. Cl.: G01S 5/00, G05D 1/02, B62D 1/28

(54) **VERFAHREN UND ANORDNUNG ZUM LOKALISIEREN UND/ODER BEWEGEN EINES OBJEKTS IN EINER UMGEBUNG**

(30) Priorität: 19.09.2017 DE 102017216554
(71) Anmelder: Robert Bosch GmbH, 70442 Stuttgart (DE)
(72) Erfinder: Rehbein, Peter, 97250 Erlabrunn (DE)
(74) Vertreter: Thürer, Andreas

(57) **Zusammenfassung**

Die Erfindung betrifft ein Verfahren zum Lokalisieren und/oder Bewegen eines Objekts (110, 120) in einer Umgebung (100), wobei auf dem Objekt wenigstens eine Sensoranordnung (200) aufgebracht ist, die wenigstens eine Sensoreinheit zum Erfassen von Informationen (150) in Bezug auf das Objekt und/oder die Umgebung aufweist, wobei die von der Sensoranordnung erfassten Informationen zur Verbesserung und/oder Plausibilisierung von Navigationsdaten (160) für das Objekt, die nicht auf Informationen der Sensoranordnung basieren, verwendet werden, und wobei das Objekt basierend auf den verbesserten und/oder plausibilisierten Navigationsdaten in der Umgebung lokalisiert und/oder bewegt wird, sowie eine Anordnung hierzu.

## Beschreibung

Die vorliegende Erfindung betrifft ein Verfahren und eine Anordnung zum Lokalisieren und/oder Bewegen eines Objekts in einer Umgebung.

### Stand der Technik

In modernen Fabrikumgebungen wie beispielsweise Werks- bzw. Montagehallen und dergleichen werden heutzutage zunehmend mehr Abläufe automatisiert. Hierzu werden beispielsweise Roboter und automatisierte bzw. autonome Fahrzeuge (sog. "Autonomous Guided Vehicles" oder AGVs) eingesetzt. Dies ist auch unter dem Begriff "Industrie 4.0" bekannt. Trotz der Automatisierung ist es weiterhin nötig, dass sich auch Menschen in der Fabrikumgebung bewegen und mit den dort vorhandenen Geräten, also beispielsweise auch Robotern, arbeiten bzw. zusammenarbeiten. Des weiteren sollten diese AGVs auch in einer menschenleeren Fertigung bzw. Infrastruktur stabil navigieren können.

Hierzu ist es wünschenswert, möglichst genaue Informationen über die Position einzelner Objekte - hierunter fallen insbesondere automatisierte Geräte wie Roboter oder Fahrzeuge - zu erhalten. Dies ist nicht zuletzt wichtig, um einen gefahrlosen Betrieb für die Personen zu ermöglichen. Davon abgesehen wäre auch an sich eine bessere bzw. genauere Lokalisierung bzw. Bewegung von Objekten in einer solchen Umgebung wünschenswert. Außerdem könnten auf diese Weise auch der Produkt- bzw. Materialfluss in einer Fabrik überwacht werden.

### Offenbarung der Erfindung

Erfindungsgemäß werden ein Verfahren und eine Anordnung zum Lokalisieren und/oder Bewegen eines Objekts mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Lokalisieren und/oder Bewegen eines Objekts in einer Umgebung. Dabei ist auf dem Objekt wenigstens eine Sensoranordnung aufgebracht, die wenigstens eine Sensoreinheit, vorzugsweise jedoch mehrere verschiedene Sensoreinheiten, zum Erfassen von Informationen in Bezug auf das Objekt und/oder die Umgebung aufweist, im Falle mehrerer verschiedener Sensoreinheiten dann vorzugsweise zum Erfassen mehrerer verschiedener Informationen in Bezug auf das Objekt und/oder die Umgebung. Als Umgebung kommt dabei beispielsweise eine Fabrikumgebung, insbesondere eine Werks- bzw. Montagehalle, in Betracht. Die von der Sensoranordnung erfassten Informationen werden dann zur Verbesserung (also insbesondere zur Erhöhung der Genauigkeit) und/oder Plausibilisierung von Navigationsdaten für das Objekt, die nicht auf Informationen der Sensoranordnung basieren, verwendet. Das Objekt wird dann basierend auf den verbesserten und/oder plausibilisierten Navigationsdaten in der Umgebung lokalisiert und/oder bewegt.

Die Navigationsdaten für das Objekt, die nicht auf Informationen der Sensoranordnung basieren, können beispielsweise mittels in der Umgebung und/oder auf dem Objekt vorhandener Sensoreinheiten wie Kameras, RADAR-Systeme,2D oder 3D-Laser-Scanner bzw. LIDAR-Systeme, Ultraschallsysteme usw. gewonnen werden. Zwar sind auf diese Weise bereits eine Lokalisierung und dann auch eine Bewegung des Objekts in der Umgebung möglich, allerdings kann es nicht zuletzt wegen Unzulänglichkeiten bei auf diese Weise gewonnen Navigationsdaten zu einer ungenauen Lokalisierung bzw. Bewegung des Objekts in der Umgebung kommen. Ursachen hierfür können beispielsweise eine direkte Einstrahlung von Sonnenlicht (Blick der Kamera bzw. des Scanners direkt in die Sonne in einer Raumrichtung), oder aber auch Nebel, Nacht, Störlichter andere Quellen (weitere Laser-Scanner o.ä.). Indem nun jedoch zusätzlich die erwähnte Sensoranordnung auf dem Objekt aufgebracht ist - denkbar ist auch, mehrere solcher Sensoranordnungen auf dem Objekt vorzusehen -, können die vorhandenen bzw. bestehenden Navigationsdaten noch verbessert und/oder plausibilisiert werden, was zu einer verbesserten Lokalisierung und damit auch einer verbesserten bzw. genaueren Bewegung des Objekts in der Umgebung führt.

Bei den hier erwähnten Sensoranordnungen kann es sich nun insbesondere um sog. "Low-Cost-Sensorik" handeln, d.h. es können in der Sensoranordnung also preisgünstige Sensoren verbaut werden, die dann verschiedene Informationen bzw. Größen erfassen und so ermöglichen, vorhandenen Daten zu verbessern. Beispielsweise können die Navigationsdaten eine Objektkarte mit einer Position des Objekts, und vorzugsweise weiterer Objekte, in der Umgebung umfassen. Eine solche Karte bzw. die darin enthaltenen Daten kann dann verbessert werden. Insbesondere kann jedoch auf diese Weise auch ein zugrundeliegender Navigationsalgorithmus (Stichwort: SLAM - "Simultaneous Localization and Mapping") stabiler gemacht werden, da er weitere Stützstellen erhält, die in robuster machen. Die Robustheit ist ein wichtiges Kriterium eines Navigationsalgorithmus.

Vorzugsweise sind die von der Sensoranordnung zu erfassenden Informationen ausgewählt aus: Beschleunigung, Temperatur, Magnetfeld, Feuchte, Helligkeit, Helligkeitsveränderungen, Körperschall, Raumschall, Druck, Kennungen von Funknetzwerken und Signalstärke von Funksignalen und/oder Funknetzwerken. Entsprechend können die Sensoreinheiten Sensoren wie Inertial- bzw. Beschleunigungssensoren, Temperatursensoren, Magnetfeldsensoren, Feuchtigkeitssensoren, Helligkeitssensoren, Mikrofone und Drucksensoren umfassen. Ebenso kommen als Sensoreinheiten aber Funkmodule wie Bluetooth-Module, GSM-Module, UMTS-Module, LTE-Module und WLAN-Module in Betracht, mit denen Kennungen und/oder Signalstärken von Funknetzwerken ermittelt werden können, was ebenfalls auf eine Position des Objekts schließen lässt. Dabei kann die Signalstärke variiert werden, sodass eine Abstandsberechnung durch den jeweiligen Messpunkt, unterhalb dessen kein Signal mehr empfangen wird, erfolgen kann.

Vorteilhafterweise weist die Sensoranordnung ein Funkmodul zur Kommunikation mit einer Recheneinheit des Objekts und/oder einer Recheneinheit eines anderen Objekts und/oder mit einem übergeordneten Server und/oder einen Mikrocontroller und/oder einen Datenspeicher auf. Das Funkmodul kann hierbei zur Kommunikation mit der Recheneinheit bzw. dem übergeordneten Server verwendet werden, um die erfassten Informationen zu übermitteln, sodass dort dann die Navigationsdaten verbessert bzw. plausibilisiert werden. Zugleich kann das Funkmodul aber auch im Sinne einer Sensoreinheit wie zuvor erläutert, verwendet werden. Ebenso kann durch ein solches Funkmodul beispielsweise eine Verbindung zu einer anderen Sensoranordnung auf einem anderen Objekt in der Umgebung hergestellt werden, sodass ein direkter Datenaustausch erfolgen kann. Weiter vorzugsweise weist die Sensoranordnung kein Modul zur kabelgebundenen Kommunikation mit der Recheneinheit des Objekts auf.

Besonders bevorzugt weist die Sensoranordnung eine autarke Energieversorgung, insbesondere mittels Batterie oder Akku, auf. Damit ist die Energieversorgung der Sensoranordnung nicht von dem Objekt, auf dem sie angebracht ist, abhängig und kann beispielsweise auch bei Ausfall bzw. Unterbrechung der Energieversorgung des Objekts Informationen sammeln. Zusammen mit der erwähnten bevorzugten Variante ohne kabelgebundene Kommunikation besteht insbesondere keine elektrische Verbindung zwischen der Sensoranordnung und Komponenten (wie z.B. Recheneinheit, Energieversorgung usw.) des Objekts.

Vorteilhafterweise werden die Informationen von der Sensoranordnung zunächst über eine Recheneinheit des Objekts oder direkt, vorzugsweise noch über ein Gateway, an einen übergeordneten Server übertragen und dort werden dann die Navigationsdaten verbessert und/oder plausibilisiert, oder aber es werden die Informationen von der Sensoranordnung an die Recheneinheit des Objekts übertragen und dort werden dann die Navigationsdaten verbessert und/oder plausibilisiert. Die Übertragung der Informationen von der Sensoranordnung an die Recheneinheit des Objekts, bei der es sich beispielsweise um ein Steuergerät bzw. eine Steuereinheit des Objekts handeln kann, kann, insbesondere wegen der räumlichen Nähe, beispielsweise direkt über BLE (Bluetooth) oder WLAN o.ä. erfolgen. Gleiches gilt auch für die Übertragung der Informationen von der Sensoranordnung direkt an den Server, insbesondere wenn dieser im Sendebereich steht. So kann entweder lokal und damit sehr schnell eine Verbesserung der Navigation erfolgen, oder aber es kann Rechenleistung eines übergeordneten Servers hierzu genutzt werden. Die Navigationsdaten können dann auch wieder an die Recheneinheit des Objekts zurückübertragen werden. Denkbar ist jedoch auch, die Informationen sowohl an die Recheneinheit des Objekts als auch den Server zu übertragen, um so beispielsweise eine redundante Verbesserung bzw. Plausibilisierung zu ermöglichen.

Als das Objekt kommt insbesondere ein fahrerloses Fahrzeug (z.B. ein AGV), das in der Umgebung lokalisiert und/oder bewegt wird, in Frage, oder aber auch ein stationäres Gerät mit wenigstens einer beweglichen Komponente, die lokalisiert und/oder bewegt wird. Gerade bei solchen Objekten ist eine möglichst genaue Lokalisierung und Bewegung wichtig, um beispielsweise Unfälle zu vermeiden. Als stationäre Geräte kommen wiederum beispielsweise Industrieroboter oder Stapelgeräte für sog. Kleinladungsträger in Frage. Kleinladungsträger wiederum können dann mittels der fahrerlosen Fahrzeuge transportiert werden.

Generell sei erwähnt, dass auf die beschriebene Weise auch Navigationsdaten für mehrere solcher Objekte (sowohl gleichartige als auch verschiedenartige) verbessert bzw. plausibilisiert werden können.

Gegenstand der Erfindung ist weiterhin eine Anordnung mit wenigstens einem Objekt, wenigstens einer darauf angebrachten Sensoranordnung und einer Recheneinheit oder einem übergeordneten Server, welche Anordnung dazu eingerichtet ist, ein erfindungsgemäßes Verfahren durchzuführen. Hinsichtlich der Vorteile sowie der vorteilhaften Ausgestaltungen der Anordnung sei zur Vermeidung von Wiederholungen auf obige Ausführungen zum Verfahren verwiesen, die hier entsprechend gelten.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Eine Ausführung auf einer Recheneinheit oder einem Server kann dabei derart sein, dass charakteristische Umgebungsmerkmale parametrierbar an die spezifische Umgebung angepasst werden, beispielsweise in Form von Schwellwerten oder Signal-Verläufen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung
- Figur 1: zeigt schematisch eine erfindungsgemäße Anordnung in bevorzugter Ausführungsform, die zur Durchführung eines erfindungsgemäßen Verfahrens geeignet ist.
- Figur 2: zeigt schematisch eine Sensoranordnung, die bei einer erfindungsgemäßen Anordnung bzw. einem erfindungsgemäßen Verfahren verwendet werden kann.

### Detaillierte Beschreibung der Zeichnung

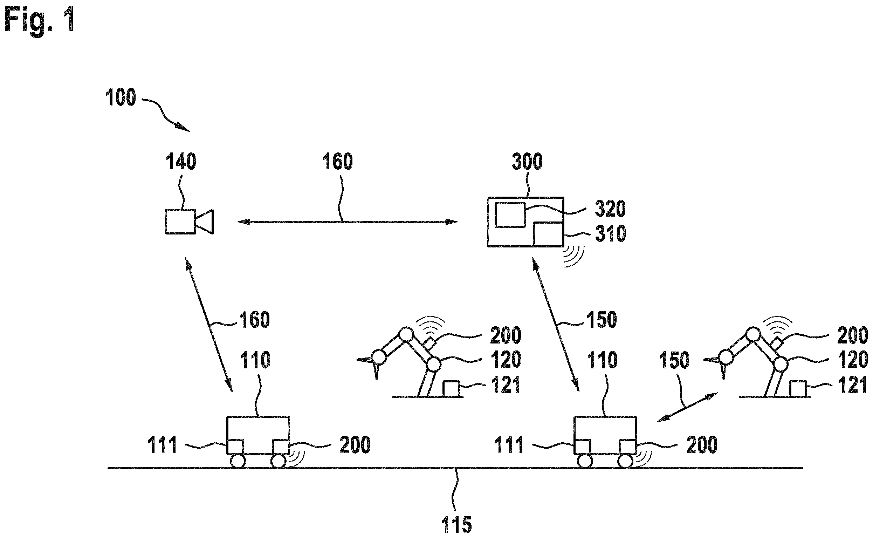

In Figur 1 ist schematisch eine erfindungsgemäße Anordnung in bevorzugter Ausführungsform gezeigt, mit der ein erfindungsgemäßes Verfahren durchgeführt werden kann. Die Anordnung weist hier beispielhaft zwei fahrerlose Fahrzeuge 110 und zwei stationäre Geräte, hier Roboter, 120, jeweils als Objekte auf, die sich in der Umgebung 100 befinden und dort lokalisiert und bewegt werden sollen.

Während die fahrerlosen Fahrzeuge 110 entlang einer vorgebebenen Bahn 115 bewegt werden sollen, sollen die Roboter 120 beispielsweise zur Beladung dieser fahrerlosen Fahrzeuge 110 verwendet werden. Generell kommen aber auch andere zu bewegende Objekte in einer solchen Umgebung in Betracht, grundsätzlich alle Arten von AGVs (sog. "Autonomous Guided Vehicles") bzw. FTS ("fahrerlose Transportsysteme").

Jedes der Objekte weist hier eine Recheneinheit als Steuereinheit auf, die fahrerlosen Fahrzeuge 110 eine Recheneinheit 111, die Roboter 120 eine Recheneinheit 121. Weiterhin ist beispielhaft eine Kamera 140 als Sensoreinheit in der Umgebung 100 gezeigt, mittels welcher zunächst Navigationsdaten 160 zu den Objekten erfasst und beispielsweise an einen (übergeordneten) Server 300, der hier ein Funkmodul 310 aufweist, übermittelt werden können. Dort kann dann beispielsweise eine Objektkarte 320 mit Positionsdaten zu den Objekten, wie sie von der Kamera 140 erfasst wurden, erstellt werden.

Es versteht sich, dass solche Navigationsdaten auch durch andere Mittel wie GPS oder Radar erhalten werden können. Ebenso können solche Navigationsdaten 160 auch direkt an das Objekt bzw. dessen Recheneinheit übermittelt werden, sodass dort die Objektkarte erstellt wird.

Weiterhin ist nun an jedem der Objekte 110 bzw. 120 eine Sensoranordnung 200 mit Funkmodul aufgebracht, mittels welcher unabhängig von den zuvor erwähnten Navigationsdaten 160 Informationen 150 in Bezug auf das Objekt und/oder die Umgebung erfasst werden können. Von diesen Sensoranordnungen 200 können diese Informationen dann beispielsweise an die Recheneinheit des Objekts, an dem sie aufgebracht sind, übermittelt werden. Alternativ oder zusätzlich können diese Informationen auch an den Server 300 und/oder an eine Recheneinheit eines anderen Objekts in der Umgebung 100 übertragen werden.

Anhand der übertragenen Informationen 150 können nun die Navigationsdaten 160 für das Objekt, die nicht auf Informationen der Sensoranordnung basieren, also beispielsweise mittels der Kamera 140 gewonnen wurden, verbessert, d.h. in ihrer Genauigkeit erhöht, und/oder plausibilisiert werden.

Je nach Art der von der Sensoranordnung 200 erfassten Information 150 kann diese Verbesserung bzw. Plausibilisierung auf unterschiedliche Art erfolgen. So kann beispielsweise anhand von Informationen zu einer Beschleunigung ein erfasster Ort korrigiert werden. Ähnliches gilt beispielsweise für Informationen zu Signalstärken von Funknetzwerken.

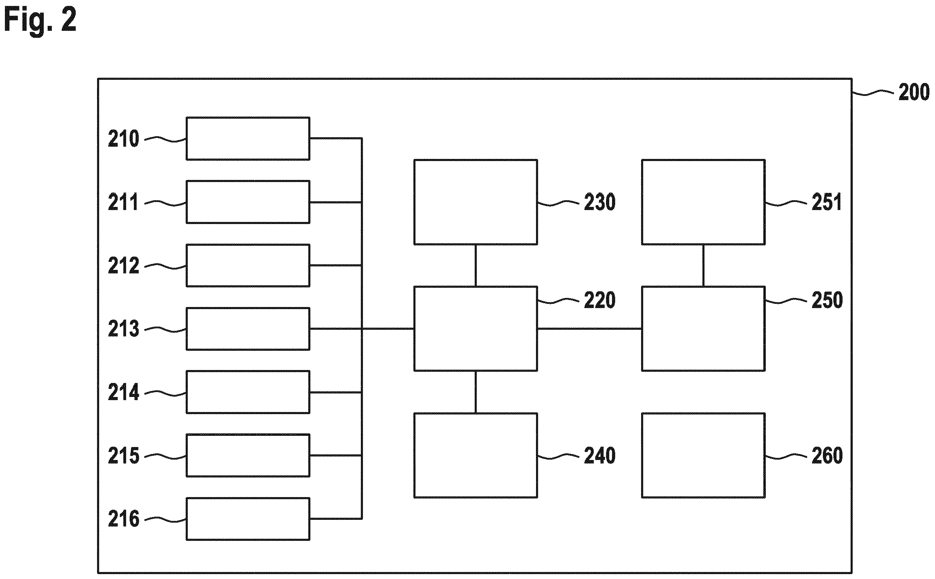

In Figur 2 ist nun schematisch eine Sensoranordnung 200 gezeigt, die bei einer erfindungsgemäßen Anordnung, wie sie beispielsweise in Figur 1 gezeigt ist, bzw. einem erfindungsgemäßen Verfahren, wie es beispielsweise in einer Ausführungsform vorstehend beschrieben wurde, verwendet werden kann.

Die Sensoranordnung 200 weist vorliegend einen Mikrocontroller 220 auf, an den eine Batterie 230 für eine autarke Energieversorgung, ggf. mit entsprechendem Batteriemanagement, und ein Datenspeicher 240 angebunden sind. Weiterhin ist an den Mikrocontroller 220 ein Funkmodul 250, beispielsweise ein Bluetooth-Modul, hier mit geeigneter Antenne 251, angebunden. Dieses Funkmodul 250 kann dabei als Sensoreinheit im Sinne vorliegender Erfindung verwendet werden, um beispielsweise eine Signalstärke zu nutzen und/oder eine Identifikation eines Funknetzwerkes zu erfassen und als Information weiterzugeben. Weiterhin sind an den Mikrocontroller 220 verschiedene Sensoreinheiten, insbesondere Sensoren, angebunden, mittels welcher ebenfalls Informationen zum Objekt, an dem die Sensoranordnung 220 aufgebracht ist, und/oder der Umgebung erfasst und weitergegeben werden können. Im gezeigten Beispiel sind als Sensoren ein Beschleunigungssensor 213, ein Temperatursensor 212, ein Magnetfeldsensor 214, ein Lichtsensor 215 sowie ein Drucksensor 210, ein Feuchtigkeitssensor 211, und ein Mikrofon 216 vorgesehen. Es versteht sich, dass auch weniger oder andere oder noch weitere Sensoren bzw. Sensoreinheiten verwendet werden können, um relevante Informationen in Bezug auf das Objekt und/oder die Umgebung zu erfassen.

Weiterhin kann die Sensoranordnung 200 beispielsweise auch noch eine RFID-Einheit 260 als Sensoreinheit bzw. als Funkmodul oder auch anderweitiger Kommunikation umfassen. All die genannten Komponenten können auf einer geeigneten Leiterplatte vorgesehen und damit in ein vorzugsweise abgedichtetes Gehäuse eingebracht sein. An dem Gehäuse können dann geeignete Befestigungsmittel wie eine Klebeschicht vorhanden sein, um die Sensoranordnung 200 an dem Objekt aufbringen bzw. befestigen zu können.

Mit der Sensoranordnung 200, deren Komponenten, wie sie vorstehend beispielhaft erläutert wurden, kostengünstig sind, können nun, wenn die Sensoranordnung 200 auf einem Objekt aufgebracht ist, viele verschiedene Informationen in Bezug auf das Objekt selbst, also beispielsweise eine Beschleunigung, und auch auf die Umgebung, also beispielsweise eine Helligkeit oder einen Druck, erfasst werden.

Diese Informationen können dann an eine Recheneinheit, die beispielsweise als Steuereinheit des Objekts dient, weitergegeben und dort zur Verbesserung bzw. Plausibilisierung von anderweitig gewonnen Navigationsdaten verwendet werden, beispielsweise unter Verwendung einer Objektkarte. Auf diese Weise kann das Objekt einerseits genauer in der Umgebung lokalisiert werden, andererseits aber auch genauer und zielgerichteter in dieser Umgebung bewegt werden.

## Patentansprüche

1. Verfahren zum Lokalisieren und/oder Bewegen eines Objekts (110, 120) in einer Umgebung (100), wobei auf dem Objekt (110, 120) wenigstens eine Sensoranordnung (200) aufgebracht ist, die wenigstens eine Sensoreinheit (210, 211, 212, 213, 214, 215, 216, 250) zum Erfassen von Informationen (150) in Bezug auf das Objekt (110, 120) und/oder die Umgebung (100) aufweist,
wobei die von der Sensoranordnung (200) erfassten Informationen (150) zur Verbesserung und/oder Plausibilisierung von Navigationsdaten (160) für das Objekt (110, 120), die nicht auf Informationen der Sensoranordnung (200) basieren, verwendet werden, und
wobei das Objekt (110, 120) basierend auf den verbesserten und/oder plausibilisierten Navigationsdaten in der Umgebung (100) lokalisiert und/oder bewegt wird.

2. Verfahren nach Anspruch 1, wobei die Navigationsdaten eine Objektkarte (320) mit einer Position des Objekts (110, 120), und vorzugsweise weiterer Objekte (110, 120), in der Umgebung (100) umfassen.

3. Verfahren nach Anspruch 1 oder 2, wobei die von der Sensoranordnung (200) zu erfassenden Informationen (150) ausgewählt sind aus: Beschleunigung, Magnetfeld, Helligkeit, Helligkeitsveränderungen, Temperatur, Feuchte, Körperschall, Raumschall, Druck, Kennungen von Funknetzwerken und die Signalstärke von Funksignalen und/oder Funknetzwerken.

4. Verfahren nach einem der vorstehenden Ansprüche, wobei die Sensoranordnung mehrere verschiedene Sensoreinheiten (210, 211, 212, 213, 214, 215, 216, 250) zum Erfassen verschiedener Informationen (150) in Bezug auf das Objekt (110, 120) und/oder die Umgebung (100) aufweist.

5. Verfahren nach einem der vorstehenden Ansprüche, wobei die Sensoranordnung (200) ein Funkmodul (250) zur Kommunikation mit einer Recheneinheit (111, 121) des Objekts und/oder einer Recheneinheit (111, 121) eines anderen Objekts und/oder einem übergeordneten Server (300) und/oder einen Mikrocontroller (220) und/oder einen Datenspeicher (240) aufweist.

6. Verfahren nach Anspruch 5, wobei die Sensoranordnung (200) kein Modul zur kabelgebundenen Kommunikation mit der Recheneinheit (111, 121) des Objekts aufweist.

7. Verfahren nach einem der vorstehenden Ansprüche, wobei die Sensoranordnung (200) eine autarke Energieversorgung, insbesondere mittels Batterie (230) oder Akku, aufweist.

8. Verfahren nach einem der vorstehenden Ansprüche, wobei die Informationen (150) von der Sensoranordnung (200) zunächst über eine Recheneinheit (111, 121) des Objekts oder direkt an einen übergeordneten Server (300) übertragen und dort die Navigationsdaten (160) verbessert und/oder plausibilisiert werden, und/oder wobei die Informationen (150) von der Sensoranordnung (200) an die Recheneinheit (111, 121) des Objekts übertragen und dort die Navigationsdaten (160) verbessert und/oder plausibilisiert werden.

9. Verfahren nach einem der vorstehenden Ansprüche, wobei das Objekt ein fahrerloses Fahrzeug (110), das in der Umgebung (100) lokalisiert und/oder bewegt wird, umfasst, oder wobei das Objekt eine stationäres Gerät (120) mit wenigstens einer beweglichen Komponente, die lokalisiert und/oder bewegt wird, umfasst.

10. Verfahren nach einem der vorstehenden Ansprüche, wobei die Navigationsdaten (160) für das Objekt, die nicht auf Informationen der Sensoranordnung basieren, mittels in der Umgebung vorhandener Sensoreinheiten (140), insbesondere Kameras und/oder Scanner und/oder Funksensoren, gewonnen werden

11. Anordnung mit wenigstens einem Objekt (110, 120), wenigstens einer darauf angebrachten Sensoranordnung (200) und einer Recheneinheit (111, 121) oder einem übergeordnetem Server (300), welche Anordnung dazu eingerichtet ist, ein Verfahren nach einem der vorstehenden Ansprüche durchzuführen.

12. Computerprogramm , das eine Recheneinheit (111, 121) oder einen übergeordneten Server (300) dazu veranlasst, ein Verfahren nach einem der Ansprüche 1 bis 10 durchzuführen, wenn es auf der Recheneinheit oder dem übergeordneten Server ausgeführt wird.

13. Maschinenlesbares Speichermedium mit einem darauf gespeicherten Computerprogramm nach Anspruch 12.
